# EUROPEAN PATENT SPECIFICATION

(11) **EP 4 484 877 B1**
(45) Date of publication and mention of the grant of the patent: **11.02.2026**
(21) Application number: 23182321.2
(22) Date of filing: 29.06.2023
(51) Int. Cl.: F28D 20/02, F28D 21/00, B60H 1/00, B65D 6/00, B60H 1/22

(54) **THERMAL ACCUMULATION ELEMENT WITH PCM SUBSTANCE, METHOD OF ITS PRODUCTION AND ITS USE**
WÄRMESPEICHERELEMENT MIT PCM-SUBSTANZ, VERFAHREN ZU SEINER HERSTELLUNG UND SEINE VERWENDUNG
ELÉMENT D'ACCUMULATION THERMIQUE AVEC SUBSTANCE PCM, SON PROCÉDÉ DE FABRICATION ET SON UTILISATION

(43) Date of publication of application: 01.01.2025
(73) Proprietor: Ustav materialov a mechaniky strojov Slovenskej akademie vied, verejna vyskumna institucia, 845 13 Bratislava - mestska cast Karlova Ves (SK)
(72) Inventor: Simancík, Frantisek, 851 01 Bratislava (SK); Oslanec, Peter, 966 23 Lovcica-Trubín (SK); Dragosek, Lukás, 965 01 Ziar nad Hronom (SK); Ponican, Ján, 974 05 Banská Bystrica (SK); Kuris, Michal, 027 21 Zaskov (SK); Spanielka, Ján, 985 22 Cinobaca (SK)
(74) Representative: Porubcan, Róbert

(56) References cited:
- DE-A1- 102011 080 670
- DE-B4- 102016 006 476
- US-A- 4 193 271
- US-A1- 2012 152 511
- US-A1- 2018 058 769
- US-A1- 2021 318 028

## Description

### Field of technology

The invention concerns thermal accumulation element which uses PCM (Phase Change Material) substance for reception and transmission of heat with transfer through the state change point, whereby the heat transfer into PCM substance is ensured by structure of the metal foam. The invention discloses method of production of the thermal accumulation element and also the various applications with its use.

### Prior state of the art

Thanks to their latent state, phase change materials (PCM) are used during transmission and accumulation of heat, whereby the process runs at low change of temperature by means of reversible phase change of the melting or solidifying. The disadvantage of PCM substances is the low thermal conductivity of most of the used PCM substances (less than 1 W/mK), which causes the problematic transfer of the heat in PCM substance. In larger volumes and with low temperature differences, the PCM may not even melt or solidify completely.

This problem is hitherto addressed by insertion of various 2D or 3D structures, respectively, with good thermal conductivity (metal nets, wires, short fibers, foams, sponges and so on) into the volume of PCM substance's mass, whereby these structures ensure the heat transfer. It is advantageous to use metal foam whose pores are filled with PCM substance. In order to fill the metal foam with PCM substance, the so-called open foams (open-cell foams or sponges, respectively), with porosity beyond 90% and the number of pores up to 40/sq. inch, that is ca. 3ks/cm³, are used.

Publication CN108582613A discloses the impregnation of metal foam with PCM substance, whereby the underpressure is used for regular saturation of the available volume of the metal foam and the removal of bubbles in the melted PCM substance. The walls of the outer casing are solid. US 2012/152511 A1 discloses a thermal accumulation element with a PCM substance according to the preamble of claim 1.

The problem of known technical solutions is the volume change (for example, even as much as 15%) with state change of the PCM substance from liquid to solid and vice versa. Some solutions use pressure-stable casing which keeps the PCM substance inside even as the volume enlarges, which leads, however, to decrease in the lifespan of the module due to its cyclical stress. If the metal frame is placed in the PCM substance's mass, or if 3D structure is placed there, respectively, the PCM substance is transferred between individual pores during volume changes, and therefore foams (sponges) with significantly open pores' walls are used, so that the PCM substance can move through these pores. The volume change can cause outpouring of the liquid PCM substance from the structure (during melting), or to creation of insulation layer between the casing and the inner metal structure, respectively, which worsens the heat transfer into PCM.

A solution is desired and not known, which will solve both problematic issues - good heat transfer into PCM substance, and changes of its volume during phase change, whereby the solution should be technologically simple, should have long lifespan and should be flexible at various applications.

### Essence of the invention

The abovementioned deficiencies are significantly remedied by the heat accumulation element with PCM substance, which includes metal foam, where the PCM substance is in the pores of the foam, whereby the PCM substance is designed for reception and transmission of the heat transferred by the walls of the pores, mainly during the transfer through the state change point, according to this invention, which essence lies in the fact that it includes outer casing (cover) from malleable thin-layer material, which is designed for at least partial flexible deformation during underpressure inside the casing; the metal foam is placed inside the casing, whereby the metal foam is in the adjacent contact with at least 75% of the surface of the inner wall of the casing, and inside the casing there is an underpressure against all outer environment in the whole operating temperature scope.

An important feature of the invention is the production of the hermetically closed casing, which has at least one wall produced from the malleable thin-layer material in such a way that this casing adjusts itself to the underpressure inside the thermal accumulation element of the surface of the inner metal foam, and thereby the surface of the inner metal foam aligns tightly to the casing around it, which ensures good transfer of the heat from the casing to the foam without the separation isolation layer between the casing and the foam.

The metal foam will preferably have a shape which defines the outer shape of the whole thermal accumulation element, and the outer shape will follow and delimit this shape of the metal foam. In this matter, the term "metal foam" must be understood not simply as material specification, but also as a description of the solid element inside the thermal accumulation element. It is then preferable if there is, inside the thermal accumulation element, one piece of the metal foam, or multiple pieces of metal foam which fall mutually into each other, which after the closing of the casing and onset of underpressure produce a unified whole with prestress, which is produced precisely by the underpressure inside the casing. Such arrangement significantly increases the solidity and strength of the thermal accumulation element even in the situation when it has, for example, thin panel-like shape, and it, at the same time, ensures good thermal conductivity in the overall volume of the accumulation element without separation layers produced by the PCM substance itself.

Malleable thin-layered material is a material which allows for flexible deformation of at least some wall of the casing or of multiple walls of the casing without damage to tightness (seal). The term "malleable" in this text must be understood as semiflexible, capable to assume the shape of the metal foam on at least some surfaces. Malleable thin-layered material will usually have a shape that is less than one hundredth of the length of some wall of the casing, which allows for thin-layered material to flexibly deform without the creation of cracks (fissures, ruptures). Usually, malleable thin-layered material will be sheet metal or foil (or metal leaf), preferably on the basis of alloy similar to metal foam; that is, the malleable material will at the same time be a material with good thermal conductivity and similar thermal expansivity as metal foam, so that is no mutual moving (sliding) of the casing and the surface of the inner metal foam during the temperature change.

The term "malleable" in this text must be interpreted in relation to the resulting characteristics of the wall of the casing; the material basis can be a metal only, but a capability of the metal sheet or metal plate to deform under the influence of underpressure is important. It can be an aluminum sheet or an aluminum foil (leaf) with thickness up to 1,0 mm, pursuant to the dimensions and desired solidity of the thermal accumulation element. The thickness of the malleable thin-layered material can be very small, too, for example at level of 10 µm. A combination of various materials to produce the outer casing is possible, too. For example, with use of the thermal accumulation element with PCM substance for the purposes of cooling of the photovoltaic panels, one wall of the outer casing can be produced directly by the plate with photovoltaic cells on the outer side, and the opposite wall of the casing can be formed, for example, by aluminum foil.

In order to achieve effective radiation of the heat from the outer surface of the casing, at least 40% of the surface of the casing will be produced from malleable metal thin-layered material, mainly from metal sheet that is up to 1,0 mm thick.

The used type of PCM substance will be chosen in such a way that PCM substance will be in chemical contact with the metal foam and in contact with the material of the casing, and also that PCM substance does not cause corrosion or other degradation of the metal foam or casing.

Pursuant to particular type of malleable thin-layered material, the technology of production of outer casing will be chosen, whereby the walls from the malleable thin-layered material can be connected by welding, soldering, gluing, edging, riveting, combination of thereof and so on. The technological methods leading to connections which can be disassembled, for example by means of flanges, screw caps and so on, are also possible.

Hermetically sealed outer casing produces conditions for achievement of permanent underpressure against outer environment in the whole temperature operating range of the thermal accumulation element. It is precisely the underpressure in the whole operating range which ensures that the malleable walls will remain aligned - will adhere - to the surface of the metal foam, and thereby they will produce reliable thermal bridge. At the same time, the permanent underpressure will prevent the outpouring of the melted PCM substance. Hermetic sealing of the casing prevents the PCM substance from contamination with the outer environment, for example oxidation, moisture and so on.

In order to ensure permanent underpressure against outer environment, one can use volume change of PCM substance during solidification. PCM substance is placed inside the metal foam, for example by means of underpressure impregnation of the melted PCM substance, and the outer casing is closed while the set inner underpressure is maintained, which can be advantageously ensured in such a way that the module is not filled with melted PCM completely, but there is a small evacuated space without PCM substance inside the casing, in which the underpressure is set. Subsequently, during the solidification of the PCM substance, the volume shrinks and the underpressure increases. The originally set underpressure and the hermetic tightness of the outer casing ensure that even after the subsequent melting of the PCM and its heating in the field of operation temperature of the element, there remains some underpressure inside the casing against the outer environment. The amount of underpressure against the closing of the outer casing can be set pursuant to later operation temperatures of the thermal accumulation element and pursuant to the pressure in the outer environment (for example, the altitude of operation).

In order to achieve permanent stability of the underpressure inside the casing, it is preferable if the PCM substance does not take the whole available space inside the casing, or inside the metal foam, respectively, even if it is completely melted. In this arrangement, the available volume inside is formed by evacuated space with underpressure, which is set during filling of the casing with the melted PCM substance. This evacuated space with the underpressure fulfills the function of expansion space. This space will usually be empty; after repeated melting it will be roughly as large as it has remained during solidification. It can compensate the subsequent thermal expansion of PCM substance during heating beyond the melting temperature, but in such case the whole component of the metal foam will expand, too, and the volume differences will be minimal. It is preferable if the evacuated space has volume that is at least 2%, especially preferably at least 5% of the available volume inside the metal foam in the state of highest operation temperature of the thermal accumulation element. The available space is any inside of the pores in the metal foam, which are mutually connected by openings or cracks, which allow for transfer of the PCM substance to the structure. After solidification of the PCM substance the available space increases pursuant to the volume change of the PCM substance, which further increases the underpressure inside the tight casing against the outer environment. This phenomenon is desirable. An eventual undesirable effect of increase of underpressure, that is, stressing of the outer casing, is not problematic in the solution according to this invention, since the outer casing needs not to be designed as a pressure vessel, but, on the contrary, with the limited deformation the casing adheres to the surface of the metal foam and then the wall of the outer surface is no longer stressed by deformation. In order to produce outer casing, it suffices that the thin-layered malleable material is used, which significantly simplifies the production of the casing. The size of the pores on the surface of the metal foam is so small that the deformation of the wall of the outer casing inside individual pore is neither relevant nor dangerous. It is preferable to use metal foam with the surface layer, which is formed only by micro-ruptures arising naturally during its production due to the change of the pressure of the gas in the foam's pores during cooling from the melting temperature to the outside temperature. Such micro-ruptures arise naturally during the production of the metal foam, the pores need not to be opened by some subsequent process.

The available space inside the foam can be filled by air with set underpressure produced by air pump during final closing of the casing, or it can be filled with gas, preferably gas with small diffusion permeability through the materials of the outer casing, or it can be eventually filled with gas which is inert with regard to PCM substance, so the high durability and quality of PCM substance is ensured.

The value of the underpressure inside the casing of the thermal accumulation element should in whole operation regime reach at least 5% difference compared to the pressure of outside environment; preferably the pressure difference is at least 10%. That means that the pressure inside the casing will be at maximum 95%, or 90%, respectively, of the pressure of the outside environment of the thermal accumulation element. This holds for melted PCM substance in its whole volume, preferably during the maximum operation temperature of the thermal accumulation element. After the PCM substance solidifies, the difference in pressure will increase even more with the decrease of temperature, pursuant to the volume change of the PCM substance and the volume of the available space.

Known earlier solutions with the use of the metal foam use open metal foams, so called open-cell foams or sponges, respectively, where the mean density of number of pores is at level of 3 ks/cm³. In the preferable arrangement of this invention the closed structure of the foam, so called close-cell foam, is used, where the pores are primarily created as closed, and subsequently after the solidification and cooling the micro-ruptures arise. These micro-ruptures ensure the transfer of the liquid PCM substance during the filling of the metal foam. The number of pores in the metal foam with the closed structure according to this invention is significantly higher, at level at least 20 ks/cm³, preferably at least 50ks/cm³. This is several times more compared to open structure, at order of up to 10ks/cm³. More than 85% of the pores in the metal foam according to this invention has size less than 5 mm, preferably less than 3 mm; other pores can fall within margins of error compared to these dimensions, since the foaming process is stochastic, pores do not arise all at once and do not expand at the same speed, and therefore they ultimately differ in size. Thanks to the large number of smaller pores with micro-ruptures in the walls, the contact surface of the metal foam with the PCM is much larger compared to known solutions with so called open-cell foams or sponges, respectively, and the transfer of the heat between the metal foam of the pore and PCM substance according to this invention is thereby more effective and faster. This remedies the problem with the heat conduction, or with the heat transfer rate in PCM substance, which has usually low heat conductance.

Large number of pores per unit of volume of PCM substance produces large contact surface between the conductive foam and PCM substance; the volume of PCM substance surrounded by the conductive walls of the pore is small and therefore it melts or solidifies quickly. The metal foam according to this invention has porosity at level of 75% to 88%, preferably 80% to 85%, which ensures sufficient mass three-dimensional structure for heat conduction; the volume of heat conductive metal material in the element is at level of at least 12%, preferably at least 15%. In the actual operation it was shown that despite, at first glance, low porosity of the used metal foam in relation to the surface layer, it was possible to fill whole available volume of such foam with melted PCM, which confirms that practically all pores are mutually connected by micro-ruptures.

The metal foam is produced in such a way that the resulting intermediate product before its insertion to the open casing has outer shape which is desired for the respective application of the thermal accumulation element; for example, it has ribs, protrusions, smooth surfaces for adjacent (adhesion) contact, and so on. Subsequently, the casing is formed by underpressure and takes on the outer shape of the metal foam. Thanks to the permanent underpressure and the malleable thin-layered material, the outer casing adjusts to the shape of the metal foam and the walls of the casing adhere to the surface of the metal foam, which produces large contact surface.

The subject matter of the invention is also the method of production of thermal accumulation element with PCM substance, which is distributed in the pores of the metal foam, whereby a component from metal foam is produced; the melted PCM substance is inserted into the metal foam, filling up to 95% to 98% of the available inner volume of the metal foam, and subsequently the component from the metal foam is hermetically closed into a casing with the set underpressure inside the casing, which is at minimum 5% to 10% less than the outside pressure.

Various technologies can be used to close the casing, including resistance welding, seam welding, edging and so on. The component from metal foam is preferably filled with PCM substance during the insertion of the first part of the casing, which at the same time closes the vessel, and subsequently the second part of the casing is put onto the first part and both are hermetically closed together. In another method the component from the metal foam can be firstly closed into a casing with the cap, subsequently the melted PCM substances is poured inside the casing through the cap, an underpressure is produced inside the casing, and the cap is hermetically closed by means of a cap, which is welded on the circumference to the neck of the cap.

One can also use a method to produce an underpressure inside the casing where the underpressure is not produced by active sucking of the air from inside the casing or by closing the casing in the vacuum chamber, respectively, but thermal expansion of PCM substance can be used in such a way that it is heated not only up to the melting point, but even to higher temperature, which causes it to expand further, and after the pouring of the PCM substance into the metal foam the casing is closed. Cooling of the PCM substance to the melting point produces an underpressure inside the casing, which even increases as the PCM substance solidifies. This method simplifies the process of closing of the casing, but it is necessary that the operation temperature of the thermal accumulation element does not later achieve a temperature during which the PCM substance was inserted into the casing with the metal foam.

Thermal accumulation element according to this invention can be preferably used as a cooling panel, where one wall of the outer casing is adjusted for adjacent contact with the heat transmitting surface, and the opposite wall of the outer casing is designed for radiation of the heat into environment. Preferably, the opposite wall has ribs in order to increase the surface and/or directioning of the air flow. Thermal accumulation element can be designed for cooling of the photovoltaic panel, whereby one wall of the outer surface can be preferably directly part of the plate with the photovoltaic cells led on the outer side. During the day the heat from the panel runs through the accumulation element through the metal foam and it continually radiates out by means of the suitable back wall of the accumulation element. Besides, the heat is accumulated into PCM substance which is gradually melted, which ensures lower temperature of the whole accumulation element. At night, when the temperatures decrease, the accumulated heat is transferred by the back wall of the thermal accumulation element into the environment until, gradually, the PCM substance solidifies and it is ready to receive heat the next day. This way the peak temperature in the photovoltaic panel decreases, which has positive effect on the efficiency of the transformation of the received light into electric energy.

Thermal accumulation element can have a shape of the board, whereby the board serves as heating or cooling element, respectively, whereby the first side (always the same) is warmer than the opposite side. In such arrangement, the layer of the PCM substance on the warmer side solidifies the last (the solidification begins on the cooler side), whereby the volume clamps are produced ultimately on the first (warmer) side. In the reverse process the warmer side melts first and the clamps in it produce spaces for compensation of the volume change. This can be preferably used with various passive coolers where the heat is always removed by the same side. This holds for heaters, too.

The shape of the surface of the thermal accumulation element, for example if it is a board, can be ribbed, so that the contact surface between the environment and the thermal accumulation element is increased, in both ways or in one way. If the ribs are on the surface produced by the ripple of the layer of the outer casing, such as foil or metal sheet, the metal foam copies this shape from the inside, which is more cost-effective solution as use of ribbed profile for the casing, which is produced, for example, by extrusion.

The thermal accumulation element can have outer shape of a cylinder (as if a can) which is inserted into the environment from which it receives, or to which it transmits, respectively, the heat, pursuant to particular application. The thermal accumulation element can be thermally charged in this way, or thermally discharged, and it can be used to store heat in the heat batteries (accumulators). The outside environment can be gaseous and/or liquid. In such case the temperature of the whole surface of the module is the same, contrary to the previously described board-like coolers. During the solidification the heat leaves by the outer surface of the casing and the material solidifies on the surface and inside it remains liquid. Due to solidification, the volume of the PCM substance decreases which increases the underpressure in the liquid part inside, and the solidified material of PCM substance either retracts inside or the clamps are produced in it from the beginning of solidification. It is important that this produces space for compensation of the increase of the volume during the subsequent melting, which ensures that the PCM substance is not pushed between the surface of the metal foam and the surface of the casing, which would interrupt the thermal bridge.

In general, the thermal accumulation element according to this invention can be used to store and transmit heat in the thermal machines (heating machines) or in heat producing systems in day/night regime or in summer/winter regime or in active/rest regime. Such use lies in cooling of the photovoltaic panel or in pre-heating of the combustion engine.

In one arrangement, there are multiple thermal accumulation elements placed in the vessel with a heat transfer medium, which is in the building used for heating. During the day the heat transmitted from the air conditioning units is transferred into vessels, where it is received into thermal accumulation elements. The vessel is heat insulated, so that the heat is stored as long as possible. The aggregation of multiple accumulation elements, in which the individual size is limited by the available technology of welding in the vacuum chamber, achieves the overall capacity sufficient to casing the period during which heating is necessary, mainly in the period between summer and winter. The heat is taken from the pressure vessel directly by flowing of the heat transfer medium into the floor heating, which operates with relatively low temperature already, which decreases the heat losses of the vessel.

Other application of the thermal accumulation element lies in storing of the waste heat from the combustion engine, which is otherwise led to the air mainly by the liquid cooler of the block and the head of the engine or the cooler of the oil. The waste heat is transmitted into one or multiple thermal accumulation elements, which are distributed in the cavities of the carrier elements, such as front side of the undercarriage, and so on. The outer casing is produced from steel or aluminum metal sheet and it participates in load transfer in the body. The heat is lead into the accumulation element from the liquid cooling circuit, whereby the process is regulated by the control of the electric pump. During the new starting of the engine, the heat from the thermal accumulation element is used for quicker heating of the engine's block, which decreases emissions. The component from the metal foam, at the same time, produces deformation component, which receives part of the energy during the impact. Eventual outpouring of the PCM substance during impact (crash) is not problematic, since the PCM substances, mainly in forms of paraffins-based waxes, are not toxic. In another application the thermal accumulation element is produced on the engine's block, where one wall of the outer surface is rigid, formed by the wall of the block, and the other is formed by thin aluminum metal sheet. Inside the surface there is a component from the aluminum foam, whereby aside from storing heat in PCM substance, it lowers the transfer of vibrations nad noise. Storing the temperature of the engine's block for another ignition (start) decreases the fuel consumption and emissions production.

Thermal accumulation element can be used to improve heat comfort in the interior of means of transport, mainly electric cars. Thermal accumulation element or multiple thermal accumulation elements can be distributed in the cooling/heating system or directly in the interior, for example in the seats, in the roof, in the floor, in the side panels of the doors, near the batteries, and so on, whereby the stabilize the temperature in the interior. A day/night or active/rest temperature regime can be sued, or the thermal accumulation elements can be charged during the charging of the electric car itself at the charging station. Such method increases the range of the electric car while maintaining heat comfort in the interior. At the same time, the thermal accumulation element can also form a functional part, for example a body reinforcement, a door reinforcement or a deformation element in the event of a crash.

Proposed invention is characterized by a simple construction that can substantially increase the utility value of the thermal accumulation element; at the same time, it solves both main technical problems, that is, the rapid spread of heat throughout the entire volume of the PCM substance, and it also solves the problems with the increase of the volume when the PCM substance melts in such a way that the PCM substance does not leak and it does not even create an insulating layer between the metal foam and the casing.

### Description of drawings

The invention is further disclosed by drawings 1 to 7. The depicted shape as well as ratio dimensions and the depicted sizes of pores are for illustration purposes only and cannot be interpreted as limiting the scope of protection.

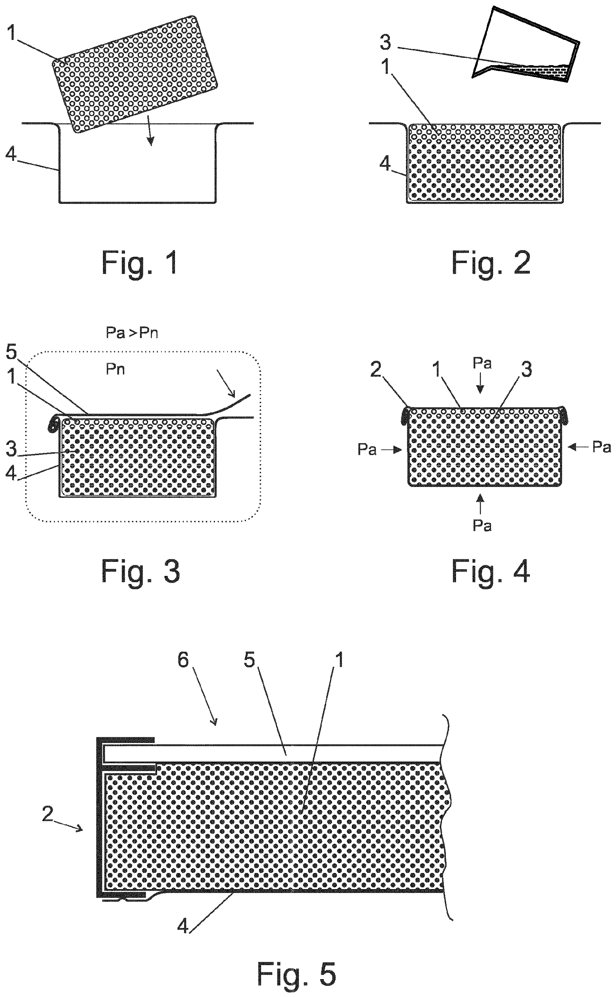

Figures 1 to 4 schematically depict the block-shaped (cuboid-shaped) thermal accumulation element, whereby figure 1 depicts the insertion of the component from the metal foam into the lower first part of the outer casing; figure 2 depicts the pouring of melted PCM substance into the pores of the metal foam.

Subsequently, figure 3 depicts closing of the outer casing in the underpressure environment and figure 4 depicts thermal accumulation element after the removal of underpressure from the environment, whereby for better clarity the size of the deformation of the walls is emphasized; actual walls will adhere already during the insertion of the metal foam to the casing.

Figure 5 depicts the use of the thermal accumulation element for cooling of the photovoltaic panel.

Figure 6 depicts the thermal accumulation element which has an outer casing produced from the foldable aluminum foil.

Figure 7 depicts the use of the thermal accumulation element in the car, where two accumulation elements are distributed in the cavities of the bodywork, in the zone of connection of the undercarriage to the transversal wall of the engine.

### Examples of realization

### Example 1

In this example according to figures 1 to 4 the metal foam 1 component in the chamber with partially vacuumed air is inserted into a tub from the 0,3 mm thick pressed aluminum sheet. The tub forms the first part 4 of the casing 2. Subsequently, the measured amount of PCM substance 3 in the liquid state is poured into the tub. The amount of PCM substance 3 corresponds to 95% of the inner porous volume of the metal foam 1. The metal foam 1 is aluminum foam with homogeneously distributed pores, whereby the porosity is approximately 85% and it has ca. 25 pores per 1 cm³.

After the PCM substance 3 is received, a lid is put on the tub, which forms the second part 5 of the casing 2, and the edges of the tub and the lid are edged and hermetically sealed. After the closing of the casing 2 the pressure inside and outside the casing 2 remains the same; after it is taken out of the chamber, an atmospheric pressure acts upon thermal accumulation element, which is 10% higher than the pressure inside the casing 2. This causes the deformation of the walls of the casing 2; the walls adhere to the surface of the metal foam 1, with the exception of zone with edging, which has higher solidity. Subsequently, when the PCM substance 3 solidifies, the underpressure increases even more due to the volume change of PCM substance 3.

### Example 2

Photovoltaic panel 6 according to figure 5 has cells placed on the standard plate-shaped ethyl vinyl acetate carrier. This plate is not equipped by usual protective layer from polyvinyl fluoride, but the plate from aluminum metal foam 1 is placed directly to it. The aluminum frame tightly delimits the circumference of the photovoltaic panel 6 and on its back side it has an aluminum sheet thick 0,2 mm welded on its circumference. This aluminum sheet copies the shape of ribs which are on the back side of the metal foam 1. The outer casing 2 of the thermal accumulator is in this example formed by the plastic plate, relatively solid frame from the aluminum profile, and thin aluminum sheet. Inside the casing 2 there is permanent underpressure which maintains the tight alignment (adhesion) of the plate with the cells to the surface of the metal foam 1 which carries the PCM substance 3.

During the day the sunlight sets off the transfer of the heat from the panel 6 through the metal foam 1, and the heat continually radiates through the back side of the panel 6. At the same time, the heat is accumulated into the PCM substance 3 which is continuously melted, which ensures low temperature of the whole panel 6. At night, the temperature decreases below the solidification point of PCM substance 3 and the heat is radiated from the back side of the photovoltaic panel 6.

The metal foam 1 at the same time increases the solidity of the whole photovoltaic panel 6 and allows for use of smaller dimension of profile for the frame. The support of ethyl vinyl acetate carrier also increases its flexural rigidity, and a thinner layer can be used, too, which better transmits the heat to the thermal accumulation element.

### Example 3

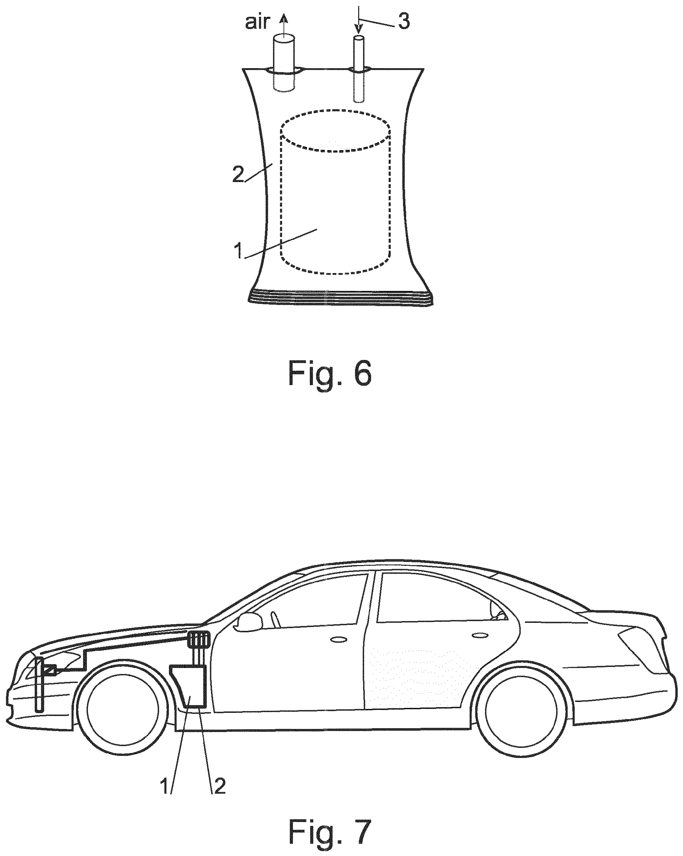

A production line is used to produce thermal accumulation elements industrially, whereby the line packs the components from the metal foam 1, prepared in advance, to the casing 2, produced from the continuous socket from the aluminum foil, according to figure 6. After the welding of the bottom seam on the socket, the component from metal foam 1 is inserted inside the casing 2, a measured amount of PCM substance 3 is poured into the casing 2 from above, the tube inserted into the upper part of the casing 2 sucks out the air from the casing 2, and subsequently the upper seam of the casing 2 is welded. The method of production according to this example is designed for quick, serial production of thermal accumulation elements with unified dimensions, which can be aggregated, if needed, into various accumulation systems.

### Example 4

In the bodywork of motor vehicle pursuant to figure 7 there are thermal accumulation elements produced in various cavities, whereby the elements receive heat after the operation temperature of the engine is reached. A fork (branch line) in the cooling system, operated by independent pump, is produced in the cooling system in order to transfer the heat. After the engine is turned off, it cools down to the temperature of the environment. During the starting of the engine, the pump of the fork of the cooling system is activated and the cooling liquid is heated by the heat from the thermal accumulation element.

### Example 5

Thermal accumulation element is used to cool and heat the interior of the electric car, whereby it is adjusted to receive and transmit heat at the charging station. During the charging of the batteries (accumulators) of the electric car, the heat is received by or transmitted from the thermal accumulation element in the controlled way. In the winter period, the heat is led into the thermal accumulation element, for example by means of electric heating, which is charged from the charging station, not from the electric car's batteries (accumulators) themselves. The thermal accumulation element in this example is placed in such a way that the part of the outer casing 2 can be directly approached in the interior. The metal foam 1 can fulfill a function of deformation element in case of the car crash, too. The reception of the heat at the charging station or the production of the heat from the electric network at the charging station, respectively, increases the summary accumulation capability of the electric car beyond the capacity of the electric batteries, and thereby it increases the range of the car, too.

### Example 6

Thermal accumulation element is used to cool the electronic board of the guided missile, where the metal foam 1 is at the same time an impact absorber (shock absorber) during launch, and it also forms a shield against electromagnetic radiation that could interfere with the missile's control from the outside.

### Industrial applicability

Industrial applicability is obvious. According to this invention it is possible to repeatedly produced and use thermal accumulation element with PCM substance inside the metal foam. The invention can be applied in all fields of industry, construction, thermal machines' constructions, cooling, heating, air conditioning, and so on.

### List of symbols

- 1 -: metal foam
- 2 -: casing
- 3 -: PCM substance
- 4 -: first part of casing
- 5 -: second part of casing
- 6 -: photovoltaic panel

## Claims

1. A thermal accumulation element with a PCM substance, which includes a metal foam (1) and an outer casing (2), where the PCM substance (3) is in pores of the metal foam (1), whereby the PCM substance (3) is designed for reception and transmission of heat transferred through walls of the pores, mainly during transition through a state change point of the PCM substance (3),
is **characterized by the fact**, that
at least part of the casing (2) is from a malleable hermetically tight thin-layered material which is adjusted for a deformation during an underpressure inside the casing (2);
the metal foam (1) is placed inside the casing (2), whereby it is in an adjacent contact with at least 75% of a surface of an inner wall of the casing (2), and inside the casing (2) there is the underpressure against an outer environment in a whole temperature operating range.

2. The thermal accumulation element with the PCM substance according to the claim 1 **is characterized by the fact**, that inside the casing (2) there is one component from the metal foam (1) or multiple components from the metal foam (1) falling mutually into each other.

3. The thermal accumulation element with the PCM substance according to the claim 1 or 2 **is characterized by the fact**, that the malleable thin-layered material has thickness that is less than hundredth of a length of the wall of the casing (2) that is adjacent to the surface of the metal foam (1).

4. The thermal accumulation element with the PCM substance according to any of the claims 1 to 3 **is characterized by the fact**, that the malleable thin-layered material is a metal sheet or a metal foil, preferably an aluminum sheet or an aluminum foil, especially preferably with thickness from 10 µm to 1,0 mm.

5. The thermal accumulation element with the PCM substance according to any of the claims 1 to 4 **is characterized by the fact**, that at least 40% of the surface of the casing (2) is produced from the metal malleable thin-layered material.

6. The thermal accumulation element with the PCM substance according to any of the claims 1 to 5 **is characterized by the fact,** that the casing (2) is hermetically sealed by welding and/or soldering and/or gluing and/or edging and/or detachable connection; preferably the casing (2) is produced by connection of a first part (4) and a second part (5).

7. The thermal accumulation element with the PCM substance according to any of the claims 1 to 6 **is characterized by the fact,** that a difference between pressure inside the casing (2) and pressure in the outside environment in a state of complete melting of the PCM substance (3) or in a state of highest operation temperature is at least 5%, preferably at least 10%.

8. The thermal accumulation element with the PCM substance according to any of the claims 1 to 7 is **characterized by** the fact, that in the state of complete melting of the PCM substance (3) or in the state of the highest operation temperature, an available expansion space in an available porous inside of the metal foam (1) has volume that is at least 2%, preferably at least 5%, of an overall available porous space inside the metal foam (1).

9. The thermal accumulation element with the PCM substance according to the claim 8 is **characterized by** the fact, that the expansion space is at least partially filled by an inert gas.

10. The thermal accumulation element with the PCM substance according to any of the claims 1 to 9 **is characterized by the fact**, that the metal foam (1) is aluminum-based and it has a closed structure of the pores with micro-ruptures which arise naturally during a production of a foamed matter.

11. The thermal accumulation element with the PCM substance according to any of the claims 1 to 10 **is characterized by the fact**, that the metal foam (1) has at least 20 pores per 1 cm³, preferably at least 50 pores; and preferably more than 85% of the pores in the metal foam (1) has dimensions smaller than 5 mm, especially preferably smaller than 3 mm.

12. The thermal accumulation element with the PCM substance according to any of the claims 1 to 11 **is characterized by the fact,** that the metal foam (1) has porosity at a level of 75% to 88%, preferably 80% to 85%, of an outer volume.

13. A method of production of a thermal accumulation element with a PCM substance, which is distributed to pores of a metal foam (1), where a component is produced from the metal foam (1), and the PCM substance (3) is inserted into the metal foam (1) in a melted state, is **characterized by the fact,** that the PCM substance (3) is distributed at maximum to 95% to 98% of an available inner porous volume of the metal foam (1) and subsequently the component from the metal foam (1) is hermetically closed in a casing (2), or into the casing (2), with a permanent underpressure inside the casing (2).

14. A use of the thermal accumulation element with the PCM substance according to any of the claims 1 to 12 for a storing and transmission of a heat in thermal machines or in heat producing machines, mainly in a day/night regime and/or in a summer/winter regime and/or in an active/rest regime.

15. The use of the thermal accumulation element with the PCM substance according to the claim 14 for a cooling of a photovoltaic panel (6) or for a pre-heating of combustion engines or to ensure a heat comfort in an interior of means of transport, mainly in the interiors of electric cars, where the thermal accumulation element receives or transmits the heat during a charging of the electric car.

## Patentansprüche

1. Wärmespeicherelement mit PCM-Substanz, das Metallschaum (1) und eine äußere Hülle (2) umfasst, wobei sich in den Poren von Metallschaum (1) die PCM-Substanz (3) befindet, die dazu bestimmt ist, die durch die Porenwände geleitete Wärme aufzunehmen und abzugeben, insbesondere beim Übergang durch den Phasenübergangspunkt der PCM-Substanz (3),
**dadurch gekennzeichnet, dass**
mindestens ein Teil der Hülle (2) aus einem formbaren, hermetisch dichten dünnschichtigen Material besteht, das für eine Verformung bei Unterdruck im Inneren der Hülle (2) ausgelegt ist,
der Metallschaum (1) im Inneren der Hülle (2) angeordnet ist, wobei er in engem Kontakt mit mindestens 75 % der Innenfläche der Hülle (2) steht, und im Inneren der Hülle (2) über den gesamten Temperaturarbeitsbereich ein Unterdruck gegenüber der Außenumgebung herrscht.

2. Wärmespeicherelement mit PCM-Substanz gemäß Anspruch 1, **dadurch gekennzeichnet, dass** sich im Inneren der Hülle (2) ein Teil von Metallschaum (1) oder mehrere ineinandergreifende Teile von Metallschaum (1) befinden.

3. Wärmespeicherelement mit PCM-Substanz gemäß Anspruch 1 oder 2, **dadurch gekennzeichnet, dass** das formbare dünnschichtige Material eine Dicke von weniger als einem Hundertstel der Länge der Hüllenwand (2) aufweist, die an der Oberfläche von Metallschaum (1) haftet.

4. Wärmespeicherelement mit PCM-Substanz gemäß einem der Ansprüche 1 bis 3, **dadurch gekennzeichnet, dass** das formbare dünnschichtige Material ein Metallblech oder eine Metallfolie ist, vorzugsweise Aluminiumblech oder Aluminiumfolie, insbesondere mit einer Dicke von 10 Mikrometern bis 1,0 mm.

5. Wärmespeicherelement mit PCM-Substanz gemäß einem der Ansprüche 1 bis 4, **dadurch gekennzeichnet, dass** mindestens 40 % der Oberfläche der Hülle (2) aus einem metallischen, formbaren dünnschichtigen Material bestehen.

6. Wärmespeicherelement mit PCM-Substanz gemäß einem der Ansprüche 1 bis 5, **dadurch gekennzeichnet, dass** die Hülle (2) durch Schweißen und/oder Löten und/oder Kleben und/oder Einfassung und/oder eine lösbare Verbindung hermetisch verschlossen ist, wobei die Hülle (2) vorzugsweise durch Verbinden eines ersten Teils (4) und eines zweiten Teils (5) gebildet ist.

7. Wärmespeicherelement mit PCM-Substanz gemäß einem der Ansprüche 1 bis 6, **dadurch gekennzeichnet, dass** der Druckunterschied im Inneren der Hülle (2) gegenüber dem Druck in der Umgebung im Zustand der vollständigen Auflösung der PCM-Substanz (3) oder im Zustand der höchsten Betriebstemperatur mindestens 5 % beträgt, vorzugsweise mindestens 10 %.

8. Wärmespeicherelement mit PCM-Substanz gemäß einem der Ansprüche 1 bis 7, **dadurch gekennzeichnet, dass** im verfügbaren porösen Innenraum von Metallschaum (1) im Zustand der vollständigen Auflösung der PCM-Substanz (3) oder im Zustand der höchsten Betriebstemperatur ein freier Expansionsraum mit einem Volumen von mindestens 2 %, vorzugsweise mindestens 5 % des gesamten verfügbaren porösen Raums des Metallschaums (1) vorhanden ist.

9. Wärmespeicherelement mit PCM-Substanz gemäß Anspruch 8, **dadurch gekennzeichnet, dass** der Expansionsraum zumindest teilweise mit einem Inertgas gefüllt ist.

10. Wärmespeicherelement mit PCM-Substanz gemäß einem der Ansprüche 1 bis 9, **dadurch gekennzeichnet, dass** der Metallschaum (1) auf Aluminiumbasis ist und eine geschlossene Porenstruktur mit Mikrorissen aufweist, die bei der Herstellung des Schaumstoffs auf natürliche Weise entstehen.

11. Wärmespeicherelement mit PCM-Substanz gemäß einem der Ansprüche 1 bis 10, **dadurch gekennzeichnet, dass** der Metallschaum (1) mindestens 20 Poren pro 1 cm³ hat, vorzugsweise mindestens 50 Poren, vorzugsweise mehr als 85 % der Poren im Metallschaum (1) eine Größe von weniger als 5 mm, besonders vorteilhaft weniger als 3 mm, aufweisen.

12. Wärmespeicherelement mit PCM-Substanz gemäß einem der Ansprüche 1 bis 11, **dadurch gekennzeichnet, dass** der Metallschaum (1) eine Porosität von 75 % bis 88 %, vorzugsweise 80 % bis 85 % des Außenvolumens aufweist.

13. Verfahren zur Herstellung des Wärmespeicherelements mit PCM-Substanz, die in die Poren von Metallschaum (1) eingebracht wird, wobei ein Teil aus Metallschaum (1) hergestellt wird, die PCM-Substanz (3) in geschmolzenem Zustand in den Metallschaum (1) eingebracht wird, **dadurch gekennzeichnet, dass** die PCM-Substanz (3) in maximal 95 % bis 98 % des verfügbaren inneren Porenvolumens von Metallschaum (1) eingebracht wird und anschließend das Teil aus Metallschaum (1) hermetisch in der Hülle (2) oder in der Hülle (2) mit dauerhaftem Unterdruck im Inneren der Hülle (2) verschlossen wird.

14. Verwendung des Wärmespeicherelements mit PCM-Substanz gemäß einem der Ansprüche 1 bis 12 zur Speicherung und Abgabe von Wärme in den Wärmekraftmaschinen oder wärmeerzeugenden Systemen, insbesondere im Tag-/Nacht- und/oder Sommer-/Winter- und/oder Aktivbetrieb-/Pausenmodus.

15. Verwendung des Wärmespeicherelements mit PCM-Substanz gemäß Anspruch 14 zum Kühlen eines Photovoltaikmoduls (6) oder zum Vorwärmen von Verbrennungsmotoren oder zur Gewährleistung des thermischen Komforts im Innenraum von Transportmitteln, insbesondere im Innenraum von Elektrofahrzeugen, wobei das Wärmespeicherelement beim Laden des Elektrofahrzeugs Wärme aufnimmt oder abgibt.

## Revendications

1. Dispositif d'accumulation thermique avec un matériau à changement de phase (MCP), qui comprend une mousse métallique (1) et une enveloppe extérieure (2), où un matériau MCP (3) se trouve dans les pores de la mousse métallique (1), lequel est destiné à recevoir et à restituer la chaleur propagée par les parois des pores, notamment lors du passage par le point de changement d'état du matériau MCP (3),
**caractérisé en ce qu'**
au moins une partie de l'enveloppe (2) est constituée d'un matériau à couche mince hermétiquement étanche et malléable qui est adapté pour se déformer sous l'effet d'une dépression à l'intérieur de l'enveloppe (2), la mousse métallique (1) est placée à l'intérieur de l'enveloppe (2) tout en étant en contact étroit avec au moins 75 % de la surface de la face interne de l'enveloppe (2), et **en ce qu'**une dépression par rapport au milieu extérieur règne à l'intérieur de l'enveloppe (2) sur toute la plage de température de fonctionnement.

2. Dispositif d'accumulation thermique avec un matériau MCP selon la revendication 1, **caractérisé** e**n ce qu**' à l'intérieur de l'enveloppe (2) se trouve une seule pièce de mousse métallique (1) ou plusieurs pièces de mousse métallique (1) s'emboîtant les unes dans les autres.

3. Dispositif d'accumulation thermique avec un matériau MCP selon la revendication 1 ou 2, **caractérisé en ce que** le matériau à couche mince malléable présente une épaisseur inférieure au centième de la longueur de la paroi de l'enveloppe (2) qui adhère à la surface de la mousse métallique (1).

4. Dispositif d'accumulation thermique avec un matériau MCP selon l'une quelconque des revendications 1 à 3, **caractérisé en ce que** le matériau à couche mince malléable est une tôle métallique ou une feuille métallique, de préférence une tôle d'aluminium ou une feuille d'aluminium, de manière particulièrement avantageuse avec une épaisseur comprise entre 10 micromètres et 1,0 millimètres.

5. Dispositif d'accumulation thermique avec un matériau MCP selon l'une quelconque des revendications 1 à 4, **caractérisé en ce qu**' au moins 40 % de la surface de l'enveloppe (2) est constituée d'un matériau métallique à couche mince malléable.

6. Dispositif d'accumulation thermique avec un matériau MCP selon l'une quelconque des revendications 1 à 5, **caractérisé en ce que** l'enveloppe (2) est hermétiquement fermée par soudage et/ou brasage et/ou collage et/ou sertissage et/ou assemblage démontable, de préférence l'enveloppe (2) est formée par l'assemblage d'une première partie (4) et d'une seconde partie (5).

7. Dispositif d'accumulation thermique avec un matériau MCP selon l'une quelconque des revendications 1 à 6, **caractérisé en ce que** la différence entre la pression à l'intérieur de l'enveloppe (2) et la pression dans le milieu environnant, à l'état de fusion complète du matériau MCP (3) ou à l'état de température de fonctionnement maximale, est d'au moins 5 %, de préférence d'au moins 10 %.

8. Dispositif d'accumulation thermique avec un matériau MCP selon l'une quelconque des revendications 1 à 7, **caractérisé en ce que** dans l'espace poreux disponible de la mousse métallique (1), à l'état de fusion complète du matériau MCP (3) ou à l'état de température de fonctionnement maximale, il existe un espace d'expansion libre d'un volume d'au moins 2 %, de préférence d'au moins 5 % du volume poreux total disponible de la mousse métallique (1).

9. Dispositif d'accumulation thermique avec un matériau MCP selon la revendication 8, **caractérisé en ce que** l'espace d'expansion est au moins partiellement rempli d'un gaz inerte.

10. Dispositif d'accumulation thermique avec un matériau MCP selon l'une quelconque des revendications 1 à 9, **caractérisé en ce que** la mousse métallique (1) est à base d'aluminium et présente une structure à pores fermés avec des microfissures formées naturellement lors de la fabrication de la masse moussée.

11. Dispositif d'accumulation thermique avec un matériau MCP selon l'une quelconque des revendications 1 à 10, **caractérisé en ce que** la mousse métallique (1) présente au moins 20 pores par cm³, de préférence au moins 50 pores, de préférence plus de 85 % des pores de la mousse métallique (1) ont une dimension inférieure à 5 mm, de manière particulièrement avantageuse inférieure à 3 millimètres.

12. Dispositif d'accumulation thermique avec un matériau MCP selon l'une quelconque des revendications 1 à 11, **caractérisé en ce que** la mousse métallique (1) présente une porosité de l'ordre de 75 % à 88 %, de préférence de 80 % à 85 % du volume extérieur.

13. Procédé de fabrication d'un dispositif d'accumulation thermique avec un matériau MCP qui est placé dans les pores d'une mousse métallique (1), dans lequel une pièce en mousse métallique (1) est formée, le matériau MCP (3) est placé dans la mousse métallique (1) à l'état fondu, **caractérisé en ce que** le matériau MCP (3) est placé dans au maximum 95 % à 98 % du volume poreux interne disponible de la mousse métallique (1), et ensuite la pièce en mousse métallique (1) est enfermée hermétiquement dans une enveloppe (2) ou à l'intérieur d'une enveloppe (2) avec une dépression permanente à l'intérieur de l'enveloppe (2).

14. Utilisation d'un dispositif d'accumulation thermique avec un matériau MCP selon l'une quelconque des revendications 1 à 12 pour le stockage et la restitution de chaleur dans des machines thermiques ou dans des systèmes produisant de la chaleur, notamment en mode jour/nuit et/ou en mode été/hiver et/ou en mode fonctionnement actif/ pause.

15. Utilisation d'un dispositif d'accumulation thermique avec un matériau MCP selon la revendication 14 pour le refroidissement d'un panneau photovoltaïque (6) ou pour le préchauffage de moteurs à combustion ou pour assurer le confort thermique dans l'habitacle de véhicules de transport, notamment dans l'habitacle de véhicules électriques, où le dispositif d'accumulation thermique reçoit ou restitue de la chaleur lors de la charge du véhicule électrique.
